# EUROPÄISCHE PATENTSCHRIFT

(11) **EP 2 737 786 B1**
(45) Veröffentlichungstag und Bekanntmachung des Hinweises auf die Patenterteilung: **15.02.2017**
(21) Anmeldenummer: 13193881.3
(22) Anmeldetag: 21.11.2013
(51) Int. Cl.: A01D 34/00

(54) **Abstellanlage für Automatik-Rasenmäher**
Parking device for automatic lawn mowers
Installation de stationnement pour tondeuse à gazon automatique

(30) Priorität: 29.11.2012 DE 102012111589
(43) Veröffentlichungstag der Anmeldung: 04.06.2014
(73) Patentinhaber: Working Robots GmbH, 89291 Holzheim (DE)
(72) Erfinder: Kölle, Patrick, 89291 Holzheim (DE)
(74) Vertreter: Baur & Weber Patentanwälte PartG mbB

(56) Entgegenhaltungen:
- DE-A1- 3 816 622
- DE-A1- 4 022 699
- DE-U- 7 513 734
- DE-U1-202012 101 295
- US-A- 4 876 832
- US-A1- 2008 161 968
- US-B1- 7 012 508

## Beschreibung

Die Erfindung betrifft eine Abstellanlage für einen Automatik-Rasenmäher.

Als Automatik-Rasenmäher, auch Roboter -Rasenmäher werden unbemannt selbstfahrende, über einen mitgeführten Akku elektrisch betriebene Rasenmähgeräte bezeichnet, welche sich über eine begrenzte vorgebbare Grasfläche bewegen und mit Schneidwerkzeugen das Gras mähen. Die Automatik-Rasenmäher steuern zur Aufladung ihres Akkus eigenständig eine ortsfeste Ladestation an. Für solche Automatik-Rasenmäher sind auch bei der Ladestation anzuordnende Überdachungen bekannt, die eine Abstellfläche, auf welcher der Automatik-Rasenmäher bei Kontakt zur Ladestation steht, zumindest teilweise überdecken. Beispiele hierfür sind eine Automower-Garage von Husqvarna oder ein Mowerhat für Automatik-Rasenmäher unterschiedlicher Hersteller. Diese bekannten Überdachungen sind als Kunststoff-Schalen in tunnelähnlicher Form ausgeführt.

In der DE 38 16 622 A1 wird ein als Rasenmäher ausgebildetes, voll automatisch fahrendes Fahrzeug beschrieben, das automatisch von einer Garage starten kann. Nach Beendigung des Arbeitseinsatzes ist ein Rückkehren in die Ausgangs-Park-Position möglich. Desweiteren weist die Abstellanlage eine Überdachung sowie eine seitliche Einfahröffnung auf. Es ist eine Signaleinrichtung vorgesehen, die vor dem Verlassen und nach dem Rückkehren in die Parkposition das Öffnen und Schließen der Garagentür veranlasst.

In der US 4 876 832 A wird eine Einhausung für einen Rasenmäher gezeigt, die eine rechteckige Abdeckung mit einer geöffneten Vorderseite aufweist. Die Abdeckung ist direkt mit der Grundfläche verbunden, wobei kein einen Boden bildendes Element vorgesehen ist. Die Abdeckung wird mittels eines Pfahls mit dem Boden verbunden.

Die DE 20 2012 101 295 U1 zeigt ein mobiles Gartengerätecenter, das Elektrogartengeräte und deren Zubehör aufnehmen kann. Das Gartengerätecenter ist nach oben geöffnet, so dass neben der seitlichen Öffnung ein zusätzlicher Zugang zu dem Innenraum vorhanden ist. Während die seitliche Öffnung als Zugang für einen Elektrorasenmäher dient, kann die obere Öffnung für die Bedienung beispielsweise der elektrischen Einrichtungen herangezogen werden.

In der US 2008/161 968 A1 wird ein "intelligenter" Rasenmäher beschrieben, der beispielsweise selbständig ein Garagentor öffnen kann.

Der vorliegenden Erfindung liegt die Aufgabe zugrunde, eine verbesserte Abstellanlage für einen Automatik-Rasenmäher anzugeben.

Die Erfindung ist im unabhängigen Anspruch 1 beschrieben. Die abhängigen Ansprüche enthalten vorteilhafte Ausgestaltungen und Weiterbildungen der Erfindung.

Die über eine steuerbare Motoranordnung betätigbare Toreinrichtung, deren Schließen und Öffnen durch eine elektronische Steuereinrichtung nach Maßgabe eines vorgebbaren Steuerprogramms automatisch vornehmbar ist, ermöglicht auf vorteilhafte Weise ein Sichern des teuren Automatik-Rasenmähers, nachfolgend auch kurz als Mäher bezeichnet, wenn dieser insbesondere nachts an der Ladestation steht, gegen Vandalismus durch fremde Personen oder auch durch größere Wildtiere und auch gegen Diebstahl.

Insbesondere kann das Steuerprogramm eine Zeitsteuerung enthalten, welche abends zu einem festlegbaren ersten Zeitpunkt durch die Steuereinrichtung über die Motoranordnung ein Schließen und morgens zu einem festlegbaren zweiten Zeitpunkt ein Öffnen der Toreinrichtung veranlasst. Die Zeitsteuerung des Steuerprogramms der Steuereinrichtung in der Abstellanlage kann auf eine zeitvariable Programmierung des Mähers mit einer Rückkehrzeit zu und einer Startzeit von der Abstellanlage abgestimmt sein, indem die Steuereinrichtung durch Ansteuerung der Motoranordnung ein Öffnen der Toreinrichtung erst kurz vor der im Mäher programmierten Startzeit und ein Schließen nach der im Mäher programmierten Rückkehrzeit veranlasst. Der erste und der zweite Zeitpunkt können auch durch erste bzw. zweite Zeitfenster definiert sein. Dabei kann vorgesehen sein, dass die Toreinrichtung jeweils zu Beginn des ersten und zweiten Zeitfensters öffnet und zum Ende des ersten und des zweiten Zeitfensters schließt und somit zwischen den Zeitfenstern sowohl während einer Ruhephase des Mähers, typischerweise über Nacht und in Verbindung mit dem Aufladen des Akkus des Mähers, als auch während der Arbeitsphase des Mähers, typischerweise tagsüber, geschlossen ist. Ein Schließen der Abstellanlage auch tagsüber kann insbesondere einem eventuellen Einnisten von Kleintieren vorbeugen. Sofern dies kein Problem darstellt oder der Mäher auch während der Arbeitsphase zur Aufladung des Akkus Zugang zu der in der Abstellanlage angeordneten Ladestation braucht, kann die Toreinrichtung zwischen dem zweiten und dem ersten Zeitpunkt geöffnet bleiben.

Die Ansteuerung der Motoranordnung nach einem Zeitsteuerprogramm, in welchem Uhrzeiten und eventuell auch Wochentage durch den Benutzer vorgebbar sind, erfordert vorteilhafterweise keine Kommunikation zwischen Mäher und Abstellanlage, so dass die Abstellanlage dadurch im wesentlichen modellunabhängig für Mäher unterschiedlicher Hersteller einsetzbar ist. Der Benutzer braucht lediglich die Zeitprogrammierung des Mähers und die Zeitprogrammierung der Steuereinrichtung der Abstellanlage zu koordinieren. Für die Steuereinrichtung der Abstellanlage können dabei marktübliche Zeitschaltuhren Verwendung finden.

In vorteilhafter Weiterbildung kann eine Vorgabe von Zeitfenstern bei erstem und/oder zweitem Zeitpunkt auch zur Überwachung des Funktionierens des Mähers dienen, indem in erster vorteilhafter Ausführung die Steuereinrichtung der Abstellanlage mittels eines Anwesenheitssensors überwacht, ob der Mäher bis zu dem ersten Zeitpunkt in die Abstellanlage eingefahren ist bzw. innerhalb eines vorgebbaren Zeitfensters nach dem zweiten Zeitpunkt die Abstellanlage verlassen hat. Ein Anwesenheitssensor kann mechanisch, optoelektronisch oder elektronisch ausgeführt sein und unabhängig von der Ladestation oder vorzugsweise im Zusammenspiel mit dieser arbeiten. Insbesondere kann ein solcher Anwesenheitssensor elektrische Verbindungsparameter zwischen Ladestation und Mäher, beispielsweise ein oder mehrere Strom- und/oder Spannungssignale der Ladestation, auswerten, welche bei ordnungsgemäß mit der Ladestation gekoppeltem Mäher auftreten. Bei Erkennung eines Fehlers im Rahmen der Überwachung, insbesondere, falls der Mäher bis zu dem ersten Zeitpunkt bzw. innerhalb des ersten Zeitfensters nicht in die Abstellanlage eingefahren ist und die Ladestation kontaktiert hat, oder falls der Mäher nach dem zweiten Zeitpunkt die Abstellanlage nicht verlässt, kann die Steuereinrichtung die Abgabe eines Fehlersignals, insbesondere einer Fehlermeldung über Telekommunikationswege veranlassen und z. B. eine SMS oder vergleichbare Nachricht an eine vorgebbare Adresse übermitteln.

Alternativ oder zusätzlich zu dem Zeitsteuerprogramm in der Steuereinrichtung können auch ein oder mehrere Kommunikationsverbindungen zwischen der Steuereinrichtung einerseits und dem Mäher und/oder der Ladestation andererseits vorgesehen sein, um die Motoranordnung der Toreinrichtung anzusteuern. So kann z. B. die Steuereinrichtung über eine solche Kommunikationsverbindung das Einfahren des Mähers in die Abstellanlage detektieren und daraufhin die Motoranordnung zum Schließen der Toreinrichtung ansteuern. Beim Start des Mähers kann dieser oder die Ladestation mit erforderlichem zeitlichem Verlauf zum Ausfahren des Mähers ein Signal an die Steuereinrichtung geben, auf welches hin diese die Motoranordnung zum Öffnen der Toreinrichtung ansteuert. In anderer Ausführung kann vorgesehen sein, dass die Steuereinrichtung nach Öffnen der Toreinrichtung ein Signal an die Ladestation oder den Mäher gibt, welches den Start und das Ausfahren des Mähers bewirkt.

Das Steuerprogramm der Steuereinrichtung kann vorteilhafterweise durch Bedienelemente der Steuereinrichtung zum manuellen Kommandieren des Öffnens und/oder Schließens der Toreinrichtung ergänzt sein, wobei ein Kommando über solche Bedienelemente Vorrang gegenüber dem Steuerprogramm hat.

Die Toreinrichtung ist vorteilhafterweise als ein Decken-Sektionaltor oder vorzugsweise als ein Rolltor mit Wickelwelle ausgebildet. Die den Torpanzer bildenden Segmente einer solchen Toreinrichtung sind vorteilhafterweise in an sich gebräuchlicher Art in beiderseitig der Einfahröffnung liegenden vertikalen Führungsschienen geführt. Vorteilhafterweise ist die Toreinrichtung mit einer Hochschiebesicherung ausgerüstet, welche verhindert, dass der Torpanzer bei geschlossener Toreinrichtung nach oben geschoben werden kann. Der Torpanzer kann auch durch Gittersegmente gebildet sein.

Die Abstellanlage bildet vorteilhafterweise einen den auf der Abstellfläche stehenden und mit der Ladestation elektrisch gekoppelten Mäher allseitig umgebenden Kasten. Die in unterschiedliche Richtungen weisenden Kastenwände sind nicht notwendigerweise durchgehend flächig geschlossen, sind aber vorteilhafterweise so gestaltet, dass eine Beschädigung oder eine Entnahme des Mähers zuverlässig verhindert sind. Vorzugsweise ist der Kasten durch einen Blechkörper gebildet, in welchem auch mehrere miteinander z. B. durch Schweißen, Kleben oder punktuelle Verbindungselemente verbundene Bleche vorliegen können.

In bevorzugter Ausführung weist die Abstellanlage zusätzlich zu der Einfahröffnung eine nach oben weisende weitere Öffnung, die nachfolgend als Bedienöffnung bezeichnet ist, auf. Die Bedienöffnung ist vorteilhafterweise durch einen Deckel abdeckbar, welcher aus seiner Schließstellung von der Öffnung weg in eine Offenstellung verlagerbar und vorzugsweise in der Schließstellung durch ein Schloss gegen unbefugtes Öffnen sicherbar ist. Durch diese weitere Öffnung sind vorteilhafterweise Bedienelemente der Steuereinrichtung, der Ladestation und/oder des in der Abstellanlage stehenden Mähers für einen befugten Benutzer zugänglich. Vorteilhafterweise ist die Bedienöffnung so bemessen, dass der Mäher durch die Bedienöffnung entnehmbar ist.

Die Überdachung ist über Verankerungsmittel in einer Grundfläche verankert und über Verbindungsmittel, insbesondere Gewindeverbindungen auf den Verankerungsmitteln gehalten. Die Verankerungsmittel, welche insbesondere Bodenanker in einer Erdbodenfläche oder Dübel in einer Steinfläche sein können, können vorzugsweise vor Aufstellen der Überdachung in die Grundfläche eingebracht werden und die Überdachung wird danach über die Verbindungsmittel auf den Verankerungsmitteln befestigt. Die Verbindungsmittel liegen vorteilhafterweise innerhalb der Überdachung an Positionen, welche bei geschlossener Abstellanlage für Unbefugte unzugänglich verborgen und nur für Befugte nach Öffnen der Toreinrichtung oder insbesondere durch die genannte Bedienöffnung zugänglich sind.

In vorteilhafter Weiterbildung kann vorgesehen sein, an der Außenseite der Überdachung Solarzellen und innerhalb der Überdachung einen über diese Solarzellen ladbaren Akku der Abstellanlage zu laden. Dies kann insbesondere von Vorteil sein, wenn die Abstellanlage an einem Aufstellort nicht an ein Stromversorgungsnetz anschließbar ist. Über den Akku der Abstellanlage können zum einen die Steuereinrichtung und die Motoranordnung mit elektrischer Energie versorgt werden. Zum anderen kann der Akku der Abstellanlage auch zum Nachladen des Akkus des Mähers, welcher vorzugsweise auch eigene Solarzellen besitzt, dienen.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Zusammenbaudarstellung von Gehäuseteilen einer Überdachung,
- Fig. 2: eine Seitenansicht in eine Abstellanlage mit Mäher,
- Fig. 3: eine Variante zu Fig. 2.

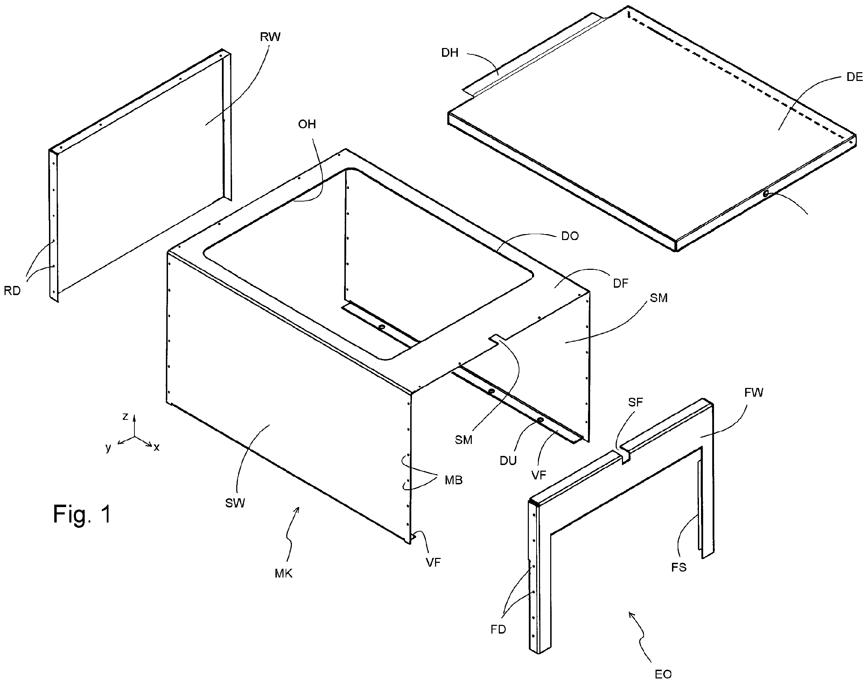

In Fig. 1 ist eine zur Verwendung in einer erfindungsgemäßen Abstellanlage vorgesehene Überdachung als Schrägansicht der einzelnen Komponenten in Zusammenbaustellung skizziert. Die Überdachung ist als ein aus mehreren Blechen zusammen gesetzter Blechkörper ausgebildet. In Fig. 1 sind die mehreren Bleche, welche jeweils in sich abgewinkelte, dreidimensionale Bauteile darstellen, skizziert.

Ein mittleres Blechteil MK besitzt eine im wesentlichen quaderförmige Einhüllende und weist eine Deckelfläche DF sowie zwei gegen diese nach unten abgewinkelte Seitenflächen SF auf. Die Seitenflächen SF sind an ihren unteren Kanten durch gegen die Seitenflächen SF abgewinkelte, von diesen aufeinander zu gerichtete Streifen VF fortgesetzt. In den Streifen VF sind in einer als Längsrichtung bezeichneten x-Richtung des mit eingezeichneten rechtwinkligen Koordinatensystems voneinander beabstandet mehrere Durchbrüche DU, insbesondere in Form von Bohrungen, ausgebildet, welche für die Befestigung des mittleren Blechteils MK auf in einer Grundfläche verankerten Verankerungselementen dienen. Die Streifen VF liegen zumindest annähernd in einer x-y-Ebene bezogen auf das eingezeichnete Koordinatenkreuz.

Die Seitenflächen SF sind im skizzierten Beispiel als in x-z-Ebenen liegende Blechflächen ausgebildet und an ihren oberen Kanten über einen mittleren Blechabschnitt, welcher eine Deckfläche DF des mittleren Blechteils MK bildet, miteinander verbunden. Im skizzierten Beispiel ist der die Deckfläche DF bildende mittlere Abschnitt des Mittelteils MK als in einer x-y-Ebene liegende Blechfläche ausgebildet, was für die Ausführung der in x-Richtung an entgegen gesetzte Enden des mittleren Blechteils MK anzusetzenden Rückwand RW und Frontwand FW von besonderem Vorteil ist, ansonsten aber nicht zwingend ist. In der Deckfläche DF ist eine großflächige Aussparung DO vorgesehen.

Das mittlere Blechteil MK bildet einen an in x-Richtung entgegen gesetzten Enden jeweils offenen Tunnel, dessen hinteres Ende durch eine Rückwand RW und dessen vorderes Ende durch eine Frontwand FW verschließbar sind. Rückwand RW und/oder Frontwand FW können mit dem Mittelteil MK durch Verschweißen, insbesondere Schweißnähte oder Schweißpunkte verbunden werden. Bevorzugt ist eine Verbindung über diskrete Befestigungselemente, wie Schrauben oder insbesondere Niete. Für solche diskreten Befestigungselemente sind in dem mittleren Blechteil MK entlang der Blechkanten am vorderen und hinteren Ende des mittleren Blechteils MK Bohrungen MB und an der Rückwand RW an korrespondierenden Positionen Bohrungen RD, an der Frontwand FW korrespondierende Bohrungen FD vorbereitet. Andere Verbindungstechniken für Bleche sind gleichfalls geeignet und dem Fachmann an sich bekannt. Die Rückwand RW und die Frontwand FW werden in zu x-Richtung paralleler Verbindungsrichtung an die entgegen gesetzt liegenden Enden des mittleren Blechteils MK angefügt und mit dem mittleren Blechteil MK in einer der beschriebenen Arten fest verbunden. Es entsteht dadurch ein im wesentlichen quaderförmiger, nach unten zwischen den Streifen VF offener Kasten, welcher zusätzlich an seiner Frontseite eine Öffnung EO in der Frontwand FW und in seiner Deckelfläche eine großflächige Öffnung DO, welche die Bedienungsöffnung bildet, aufweist.

Mittels eines Deckels DE, welcher in zur Rückwand RW ähnlicher Weise als eine ebene Fläche mit abgekanteten Randstreifen ausgebildet ist, kann die Bedienöffnung DO in der Deckelfläche DF des mittleren Blechteils MK abgedeckt werden. Der Deckel DE ist vorteilhafterweise an seinem bei der Frontwand FW liegenden vorderen Ende mittels eines in Fig. 1 nicht mit dargestellten Schlosses gegen den Kasten aus mittlerem Blechteil MK, Rückwand RW und Frontwand FW verriegelbar. Hierfür kann beispielsweise im Deckel DE an dem vorderen abgekanteten Streifen ein Durchbruch SD vorgesehen sein, in welchem ein Schloss oder eine vergleichbare Verriegelungseinrichtung einsetzbar ist. Aufnahmeöffnungen für ein solches Schloss oder dergleichen sind auch als Aussparungen SF in der Frontwand FW und Aussparung SM in der Deckfläche DF des mittleren Blechteils MK vorgesehen. Ein Riegelelement kann beispielsweise bei verriegeltem Schloss die Deckfläche DF seitlich von der Aussparung SM untergreifen und so ein Abheben der Vorderseite des Dekkels von der Verbindungsstelle zwischen Frontwand FW und mittlerem Blechteil MK verhindern. Der dem Durchbruch SD in Längsrichtung x entgegen gesetzt liegende hintere Rand des Deckels DE kann beispielsweise mit einem Fortsatz DH die hintere Kante OH der Aussparung DO untergreifen. In nicht dargestellter vorteilhafter Ausführung kann der Deckel über ein Scharnier bei seiner hinteren Kante auf der Deckfläche DF hinter der Aussparung befestigt sein. Andere Arten der Abdeckung der Öffnung DO durch einen entfernbaren Deckel, beispielsweise durch Einschieben der hinteren Kante des Deckels den oberen abgewinkelten Streifen der Rückwand RW, sind dem Fachmann an sich geläufig. Ein Verriegelungselement eines Schlosses sichert dann zugleich ein Verschieben des Deckels DE in x-Richtung von der Rückwand weg und verhindert so, dass der hintere Rand des Deckels frei gelegt werden kann. Bei geöffnetem Schloss kann der Deckel DE im skizzierten Beispiel vollständig abgenommen werden. Es kann aber auch vorgesehen sein, den Deckel DE über ein Scharnier oder dergleichen an dem aus mittlerem Blechteil MK, Rückwand RW und Frontwand FW gebildeten Kasten schwenkbar zu lagern und durch ein Schloss eine Schwenkbewegung aus dem die Öffnung DO verschließenden Schließzustand in einen Offenzustand zu verhindern. Die Orientierung der beispielhaft geschilderten Komponenten innerhalb der Überdachung ist variabel.

Im zusammen gefügten Zustand der dargestellten Bauteile der Überdachung bildet die Öffnung EO in der Frontwand FW eine Einfahröffnung für einen Automatik-Rasenmäher in den von der Überdachung überdeckten Raum bzw. aus diesem heraus. Die Öffnung EO ist durch eine Toreinrichtung verschließbar, wobei eine solche Toreinrichtung vorzugsweise aus einem geschlossenen Zustand nach oben und in das Innere des Kastens der Überdachung verlagerbar ist. Eine Toreinrichtung ist in bevorzugter Ausführung als ein Rolltor ausgebildet, dessen um eine horizontale Achse gelenkig miteinander verbundenen Stäbe in seitlichen Führungen FS, welche vorzugsweise an der Frontwand FW ausgebildet sind, bei ihrer Vertikalbewegung geführt und im geschlossenen Zustand in x- und y-Richtung abgestützt sind.

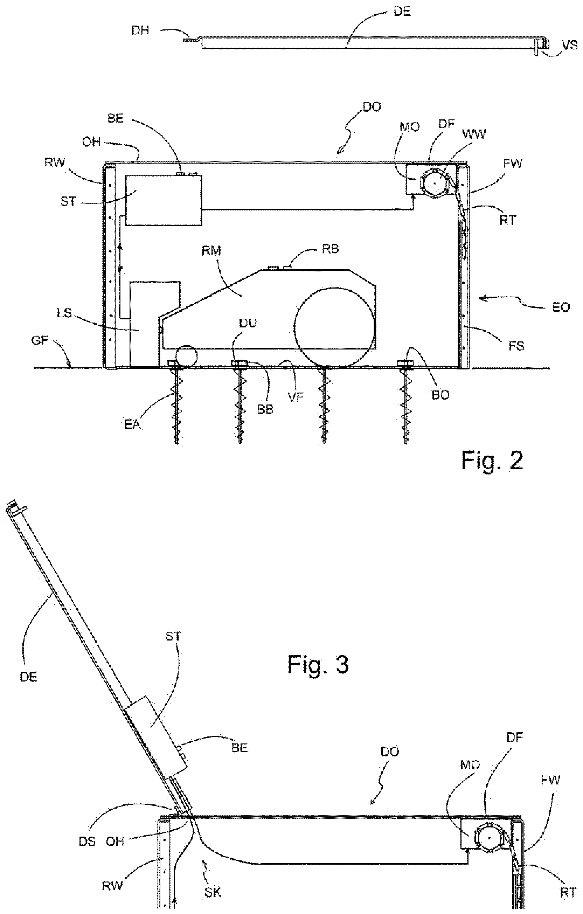

In der in Fig. 2 schematisch dargestellten Seitenansicht einer erfindungsgemäßen Abstellanlage ist eine Wickelwelle WW für ein Rolltor als Toreinrichtung in dem oberen Winkelbereich zwischen Frontwand FW und Deckfläche DF des mittleren Blechteils MK angeordnet. Die Wickelwelle WW ist durch eine nur schematisch dargestellte Motoranordnung MO bidirektional antreibbar, so dass bei Drehung der Wickelwelle WW in der Skizze nach Fig. 2 im Uhrzeigersinn das Rolltor RT in der Einfahröffnung EO abgesenkt und bei Drehung der Wikkelwelle WW im Gegenuhrzeigersinn das Rolltor RT angehoben wird.

Die Motoranordnung MO ist durch eine innerhalb des Kastens der Überdachung angeordnete elektronische Steuereinrichtung ST ansteuerbar, um das Rolltor RT zum Verschließen der Einfahröffnung EO abzusenken oder zur Freigabe der Einfahröffnung EO anzuheben und dabei von der Wickelwelle WW abzuwickeln und bzw. auf diese aufzuwickeln.

Die Steuereinrichtung kann in der bereits beschriebenen Weise in bevorzugter Ausführung ein Zeitsteuerprogramm nach Art einer Zeitschaltuhr besitzen. Ein solches Zeitsteuerprogramm bewirkt dann beispielsweise täglich zu einer ersten, vom Benutzter vorgebbaren Uhrzeit als erstem Zeitpunkt ein Verschließen der Einfahröffnung EO durch Absenken des Rolltores RT und zu einer zweiten, den zweiten Zeitpunkt bildenden Uhrzeit ein Öffnen der Einfahröffnung EO durch Anheben des Rolltores RT.

In Fig. 2 befindet sich ein Automatik-Mäher RM in seiner Parkposition an einer Ladestation LS und steht mit dieser in elektrischem Kontakt, um insbesondere einen im Mäher RM integrierten Akku aufzuladen. Der Mäher RM und/oder die Ladestation LS haben vorteilhafterweise ein eigenes Zeitsteuerprogramm, welches eine Startzeit des Mähers für den Beginn einer Arbeitsphase und eine Rückkehrzeit des Mähers zum Beenden der Arbeitsphase enthalten können. Solche Zeiteinstellungen des Mähers RM können typischerweise über am Mäher vorhandene Bedienelemente RB durch einen Benutzer veränderlich vorgegeben werden. Vorteilhafterweise kann nach Abnehmen des Deckels DE von der Deckfläche DF des mittleren Blechteils MK die obere Öffnung DO frei gelegt werden, so dass ein Benutzer Zugriff auf die Bedienelemente RB des Mähers RM hat. Der Mäher kann dadurch in seiner Parkposition an der Ladestation LS vorteilhafterweise vom Benutzer umprogrammiert oder kontrolliert werden.

Bei freiliegender Öffnung DO hat der Benutzer auch Zugriff auf Bedienelemente BE der Steuereinrichtung ST, mittels welcher diese programmierbar sein kann. Eine Programmierung der Steuereinrichtung ST kann auch über eine Datenschnittstelle durch ein externes Eingabegerät vorgesehen sein. Bedienelemente der Steuereinrichtung können auch zur manuellen Eingabe von Steuersignalen zur Ansteuerung der Motoranordnung MO dienen, um diese unabhängig von dem geschilderten Steuerprogramm für ein Öffnen oder Schließen des Rolltors RT in Gang zu setzen. Bedienelemente zur vorrangigen Ansteuerung der Motoranordnung MO können auch getrennt von der Steuereinrichtung ST, beispielsweise an der Motoranordnung MO selbst, vorgesehen sein.

Die Steuereinrichtung kann insbesondere bei dauerhaft, beispielsweise über ein Scharnier, mit dem Kasten der Überdachung verbundenem Deckel auch an dem Deckel angeordnet sein und hierdurch bei aufgeklapptem Deckel für den Benutzer besser zugänglich sein.

Die Steuereinrichtung ST kann über eine drahtlose oder wie in Fig. 2 skizziert leitungsgebundene Signalverbindung auch mit der Ladestation LS und/oder dem Mäher RM gekoppelt sein und hierdurch insbesondere zur Detektion der Anwesenheit des Mähers in der Abstellanlage geeignet sein. Hierdurch kann beispielsweise der Mäher darauf überwacht werden, ob er nach einer Arbeitsphase bis zu einem einprogrammierten ersten Zeitpunkt in der Abstellanlage eingetroffen ist und die Ladestation ordnungsgemäß kontaktiert und/oder ob der Mäher beim morgendlichen Start ordnungsgemäß sich von der Ladestation LS löst. Weitere Verknüpfungen in bereits beschriebener Art können zwischen Steuereinrichtung ST und Ladestation LS bzw. Mäher RM vorgesehen sein.

Der aus den mehreren Blechteilen zusammengesetzte Kasten der Überdachung ist auf einer Grundfläche GF aufgestellt. In die Grundfläche GF, welche insbesondere eine Erdbodenfläche sein kann, seien im skizzierten Beispielsfall Verankerungselemente EA eingelassen, an deren oberem Ende Verbindungsstrukturen, vorzugsweise Gewindebolzen vorgesehen sind, welche durch die Durchbrüche DU in den zum Inneren der Überdachung hin abgewinkelten Streifen VF des mittleren Blechteils MK durchgreifen. Auf die Gewindebolzen sind Muttern BB aufgeschraubt, so dass das mittlere Blechteil MK fest auf den Verankerungselementen EA gehalten ist. Durch die Anordnung der Gewindeverbindungen mit Bolzen BO und Muttern BB ist ein Lösen dieser Halteverbindungen nur bei geöffnetem Kasten der Überdachung, insbesondere durch Anheben des Rolltors RT offener Einfahröffnung EO und insbesondere nach Abheben des Deckels DE offener oberer Betriebsöffnung DO möglich. Zur Verriegelung des Deckels in geschlossenem Zustand ist ein in die Aussparung SD eingesetztes Schloss VS angedeutet.

In Fig. 3 ist eine zu Fig. 2 alternative Ausgestaltung des die obere Öffnung DO verschließenden Deckels DE mit geöffnetem Deckel skizziert. Der Deckel DE ist in dieser bevorzugten Ausführung über ein in Fig. 3 nur schematisch skizziertes Scharnier mit dem Kasten der Abstellanlage, vorzugsweise an der Dekkelfläche DF verbunden und um eine im skizzierten Beispiel senkrecht zur Zeichenebene verlaufende Schwenkachse zwischen der dargestellten Öffnungsstellung und einer die Öffnung DO verschließenden Schließstellung verschwenkbar. Vorteilhafterweise ist die Steuereinrichtung ST dabei an der in Schließstellung unzugänglichen Seite des Deckels DE angeordnet und wird mit diesem verschwenkt. In der dargestellten Öffnungsstellung, in welcher der Deckel DE auch durch nicht mit eingezeichnete Mittel, z. B. auch durch Ausgestaltung des Scharniers, in seiner Schwenkbewegung begrenzt sein kann, ist die Steuereinrichtung ST für den Benutzer besonders vorteilhaft zugänglich. Über Signalverbindungen, insbesondere Kabel SK ist die Steuereinrichtung ST signalbübertragend mit der Motoranordnung MO und gegebenenfalls der Ladestation LS verbunden.

Die obere Betriebsöffnung DO ist vorzugsweise so groß gestaltet, dass der Mäher auch durch diese Bedienöffnung DO nach oben entnehmbar ist.

Während in Fig. 1 und Fig..2 die Führungsschiene FS als unmittelbar durch das umgeformte Blechteil der Frontwand FW gebildet dargestellt ist, kann in bevorzugter Ausführung vorgesehen sein, dass die Führungsschiene durch eine separate Profilschiene gebildet ist, und dass das Blechteil der Frontwand eine stabile Aufnahme für eine solche separate Führungsschiene bildet.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Abstellanlage für einen Automatik-Rasenmäher (RM) mit einer eine Abstellfläche bei einer Ladestation (LS) zumindest teilweise überdeckenden und auf einer Grundfläche (GF) verankerbaren Überdachung sowie einer seitlichen Einfahröffnung (EO), wobei eine Toreinrichtung (RT) zum Verschließen der Einfahröffnung (EO) in die Abstellanlage integriert ist, wobei eine Motoranordnung (MO) zum motorischen Öffnen und Schließen der Toreinrichtung (RT) eingerichtet ist, **dadurch gekennzeichnet, dass** eine innerhalb der Überdachung angeordnete elektronische Steuereinrichtung (ST) die Motoranordnung (MO) nach einem vorgebbaren Steuerprogramm automatisch steuert.

2. Abstellanlage nach Anspruch 1, **dadurch gekennzeichnet, dass** die Toreinrichtung (RT) ein Rolltor oder Sektionaltor enthält.

3. Abstellanlage nach Anspruch 2, **dadurch gekennzeichnet, dass** an der Oberseite (DF) der Überdachung eine durch eine Abdeckung (DE) verschließbare Bedienöffnung (DO) vorgesehen ist.

4. Abstellanlage nach Anspruch 3, **dadurch gekennzeichnet, dass** die Abdeckung (DE) durch ein Schloss (VS) in der Schließstellung gesichert ist.

5. Abstellanlage nach Anspruch 3 oder 4, **dadurch gekennzeichnet, dass** die Steuereinrichtung (ST) für manuelle Bedienung von Bedienelementen (BE) durch die Bedienöffnung (DO) zugänglich ist.

6. Abstellanlage nach einem der Ansprüche 1 bis 5, **dadurch gekennzeichnet, dass** die Steuereinrichtung (ST) ein zeitgesteuertes Steuerprogramm enthält.

7. Abstellanlage nach einem der Ansprüche 1 bis 6, **dadurch gekennzeichnet, dass** der Steuereinrichtung (ST) ein zur Erkennung der Anwesenheit des Automatik-Rasenmähers (RM) unter der Überdachung eingerichteter Anwesenheitssensor zugeordnet ist.

8. Abstellanlage nach einem der Ansprüche 1 bis 7, **dadurch gekennzeichnet, dass** Verbindungsmittel (BB) zur lösbaren Verbindung der Überdachung in einer Grundfläche verankerten Verankerungsmittel (EA) nur über eine Öffnung (EO, DO) der Überdachung zugänglich sind.

9. Abstellanlage nach einem der Ansprüche 1 bis 8, **dadurch gekennzeichnet, dass** die Überdachung einen den Abstellraum mehrseitig begrenzenden Blechkörper (MK, FW, RD) aufweist.

10. Abstellanlage nach einem der Ansprüche 1 bis 9, **dadurch gekennzeichnet, dass** ein Teil der Außenseite der Überdachung mit Solarzellen versehen ist und in der Abstellanlage wenigstens ein über die Solarzellen ladbarer Akkumulator angeordnet ist.

## Claims

1. Parking system for an automatic lawnmower (RM) having a cover, which at least partially covers a parking area at a charging station (LS) and can be anchored to a base area (GF), and a lateral insertion opening (EO), wherein a door device (RT) for closing off the insertion opening (EO) is integrated into the parking system, that an engine arrangement (MO) is configured for opening and closing the door device (RT) by motor, **characterized in that** an electronic control device (ST) which is arranged inside the cover controls the motor arrangement (MO) automatically according to a predefinable control program.

2. Parking system according to Claim 1, **characterized in that** the door device (RT) contains a tambour door or sectional door.

3. Parking system according to Claim 2, **characterized in that** an operator control opening (DO) which can be closed off by a cover (DE) is provided on the upper side (DF) of the cover.

4. Parking system according to Claim 3, **characterized in that** the cover (DE) is secured in the closed position by a lock (VS).

5. Parking system according to Claim 3 or 4, **characterized in that** the control device (ST) is accessible for manual operation of operator control elements (BE) through the operator control opening (DO).

6. Parking system according to one of Claims 1 to 5, **characterized in that** the control device (ST) contains a timed control program.

7. Parking system according to one of Claims 1 to 6, **characterized in that** the control device (ST) is assigned a presence sensor which is configured to detect the presence of the automatic lawnmower (RM) under the cover.

8. Parking system according to one of Claims 1 to 7, **characterized in that** connecting means (BB) for detachably connecting the cover in anchoring means (EA) anchored in a base area are accessible only via an opening (EO, DO) in the cover.

9. Parking system according to one of Claims 1 to 8, **characterized in that** the cover has a sheet-metal body (MK, FW, RD) which bounds the parking space on multiple sides.

10. Parking system according to one of Claims 1 to 9, **characterized in that** part of the outside of the cover is provided with solar cells, and at least one accumulator which can be charged by means of the solar cells is arranged in the parking system.

## Revendications

1. Installation de stationnement pour une tondeuse à gazon automatique (RM), comprenant un auvent recouvrant au moins partiellement une surface de stationnement près d'une station de charge (LS) et pouvant être ancrée à une surface de base (GF), ainsi qu'une ouverture d'entrée (EO) latérale, un dispositif de portail (RT) destiné à fermer l'ouverture d'entrée (EO) étant intégré dans l'installation de stationnement, qu'un arrangement de moteur (MO) destiné à l'ouverture et à la fermeture motorisées du dispositif de portail (RT) est installé, **caractérisée en ce qu'**un dispositif de commande (ST) électronique disposé à l'intérieur de l'auvent commande automatiquement l'arrangement de moteur (MO) conformément à un programme de commande pouvant être prédéfini.

2. Installation de stationnement selon la revendication 1, **caractérisée en ce que** le dispositif de portail (RT) contient un portail roulant ou un portail en sections.

3. Installation de stationnement selon la revendication 2, **caractérisée en ce qu'**une ouverture de service (DO) pouvant être fermée par un couvercle (DE) se trouve sur le côté supérieur (DF) de l'auvent.

4. Installation de stationnement selon la revendication 3, **caractérisée en ce que** le couvercle (DE) est bloqué en position de fermeture par une serrure (VS).

5. Installation de stationnement selon la revendication 3 ou 4, **caractérisée en ce que** le dispositif de commande (ST) est accessible à travers l'ouverture de service (DO) pour une utilisation manuelle d'éléments de commande (BE).

6. Installation de stationnement selon l'une des revendications 1 à 5, **caractérisée en ce que** le dispositif de commande (ST) contient un programme de commande commandé en fonction du temps.

7. Installation de stationnement selon l'une des revendications 1 à 6, **caractérisée en ce qu'**un détecteur de présence installé sous l'auvent pour détecter la présence de la tondeuse à gazon automatique (RM) est associé au dispositif de commande (ST).

8. Installation de stationnement selon l'une des revendications 1 à 7, **caractérisée en ce que** des moyens d'assemblage (BB) destinés à réaliser un assemblage amovible de l'auvent dans des moyens d'ancrage (EA) ancrés dans une surface de base sont seulement accessibles par le biais d'une ouverture (EO, DO) de l'auvent.

9. Installation de stationnement selon l'une des revendications 1 à 8, **caractérisée en ce que** l'auvent possède des corps en tôle (MK, FW, RD) qui délimitent l'espace de stationnement sur plusieurs côtés.

10. Installation de stationnement selon l'une des revendications 1 à 9, **caractérisée en ce qu'**une partie du côté extérieur de l'auvent est pourvu de cellules solaires et au moins un accumulateur pouvant être chargé par le biais des cellules solaires est disposé dans l'installation de stationnement.
